# EUROPEAN PATENT SPECIFICATION

(11) **EP 1 191 366 B1**
(45) Date of publication and mention of the grant of the patent: **03.03.2004**
(21) Application number: 01117381.2
(22) Date of filing: 18.07.2001
(51) Int. Cl.: G02B 6/16

(54) **Optical fibre grating fabrication apparatus which minimizes diffraction effects**
Anordnung zur Herstellung von Gittern in optischen Fasern, die beugungsoptische Effekte minimiert
Dispositif d'inscription de réseaux dans une fibre optique qui permet de minimiser les effets de diffraction

(30) Priority: 25.07.2000 KR 2000042700
(43) Date of publication of application: 27.03.2002
(73) Proprietor: SAMSUNG ELECTRONICS CO. LTD., Suwon-city, Kyungki-do (KR)
(72) Inventor: Park, Moo-Youn, Suwon-city, Kyungki-do (KR)
(74) Representative: Grünecker, Kinkeldey, Stockmair & Schwanhäusser Anwaltssozietät

(56) References cited:
- EP-A- 0 606 726
- WO-A-00/11509
- RIANT I ET AL: "New method to control chirp and wavelength of fibre Bragg gratings for multichannel chromatic dispersion compensation" IEE COLLOQUIUM ON OPTICAL FIBRE GRATINGS (REF. NO.1997/037), IEE COLLOQUIUM ON OPTICAL FIBRE GRATINGS (REF. NO.1997/037), LONDON, UK, 7 FEB. 1997, pages 18/1-3, XP000791066 1997, London, UK, IEE, UK
- PROHASKA J D ET AL: "MAGNIFICATION OF MASK FABRICATED FIBRE BRAGG GRATINGS" ELECTRONICS LETTERS, IEE STEVENAGE, GB, vol. 29, no. 18, 1993, pages 1614-1615, XP000195250 ISSN: 0013-5194
- M.LAIKIN: "LENS DESIGN", 1995, M.DEKKER, INC., NEW-YORK, BASEL, HONG-KONG
- LAIKIN M.: "LENS DESIGN", 1995, M.DEKKER, INC., NEW-YORK, BASEL, HONG-KONG

## Description

### BACKGROUND OF THE INVENTION

### 1. Field of the Invention

The present invention relates generally to an optical fiber grating fabricating apparatus, and in particular, to an optical fiber grating fabricating apparatus for minimizing a diffraction effect using a mobile concave lens.

### 2. Description of the Related Art

An optical fiber grating is a filter selecting a particular wavelength along the core of an optical fiber. The optical fiber grating removes or reflects light at a particular wavelength by inducing a periodical change in the refractive index of an optical fiber using a UV (Ultra Violet) laser. Optical fiber gratings are divided into short period fiber gratings and long period fiber gratings. The short fiber gratings perform filtering by reflecting light at a predetermined wavelength, whereas the long period fiber gratings couple a core mode to a cladding mode. Since long period fiber gratings with a period of tens of micrometers to hundreds of micrometers can remove light at a predetermined wavelength by coupling light from a code more to a cladding mode, they are used as gain flattening filters for EDFAs (Erbium Doped Fiber Amplifiers).

The long period fiber gratings are fabricated by incurring periodical changes in the refractive index of the core of a UV-sensitive optical fiber. The refractive index is increased in portions exposed to UV light and it is intact in normal portions, thereby generating a periodical refractive index change along the length direction of the optical fiber.

The fiber gratings are fabricated by using a mask or not. If a mask is not used, fiber gratings can be fabricated in various periods. However, due to the disadvantages of difficulty in ensuring reproducibility and long fabrication time, this method is not widely used. On the other hand, use of a mask for fabrication of fiber gratings has the advantages of high reproducibility and short fabrication time. Therefore, a mask is usually used in fabricating fiber gratings.

There are three ways to fabricate fiber gratings using a mask: a popular mask of a particular period having a simple structure, a projection method using a mask of a predetermined period suggested to overcome the shortcomings of the popular mask, and a projection method using a multi-period mask suggested to overcome the shortcomings of the proceeding projection method.

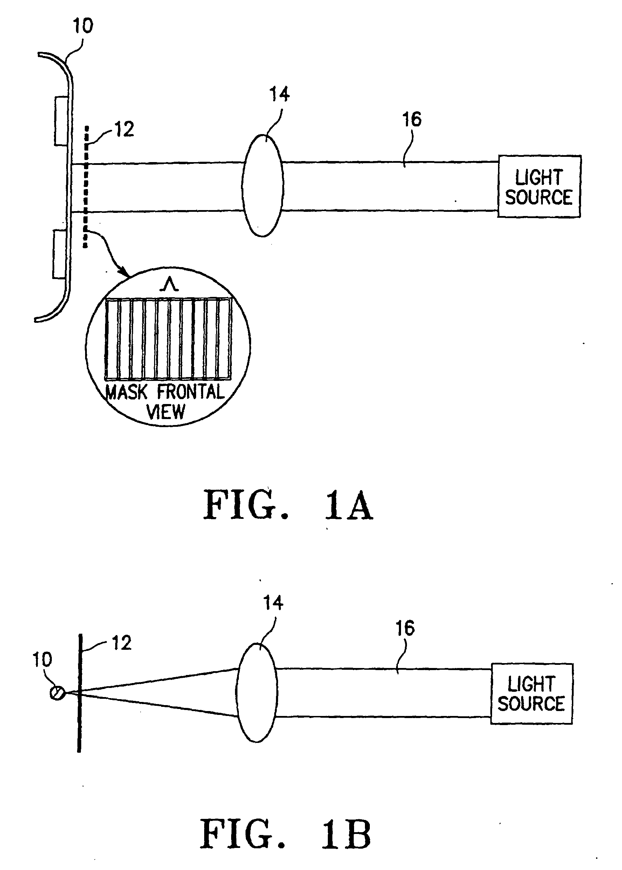

Use of a particular period mask is popular. As shown in FIGs. 1A and 1B, a mask 12 with a predetermined period A is disposed apart from an optical fiber 10. UV light 16 emitted from a light source is focused in a perpendicular direction to the length of the optical fiber 10 using a cylindrical concave lens 14. In this method, fiber gratings with one wavelength band can be fabricated with the single mask 12. To fabricate fiber gratings with a different wavelength band, the mask 12 must be replaced. Therefore, this method is not effective in cost and convenience.

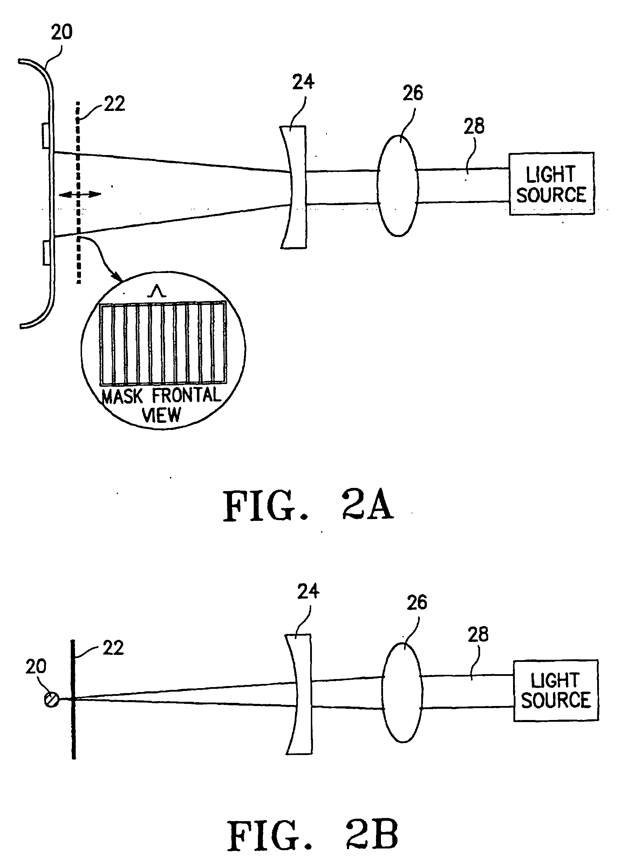

A projection method using a mask with a predetermined period A is similar to the first method in that fiber gratings are written in an optical fiber with a mask disposed before the optical fiber. As shown in FIGs. 2A and 2B, UV light 28 focused in a perpendicular direction to an optical fiber 20 by a cylindrical convex lens 26 is diverged along the axial direction of the optical fiber 20 through a cylindrical concave lens 24. Shadow patterns produced while light diverged through the cylindrical concave lens 24 is passing through a mask 22 are written on the optical fiber 20. The period of the shadow patterns on the optical fiber 20 varies by moving the mask 22 to and fro. If the mask 22 approaches the cylindrical concave lens 24, the period of the shadow patterns increases, while if the mask 22 approaches the optical fiber 20, the period of the shadow patterns decreases.

Despite the advantage of fabrication of fiber gratings with diverse wavelength bands, this method also has a limited period range. Thus, if the period of fiber gratings is too great or too small, a new mask with a different period must be used.

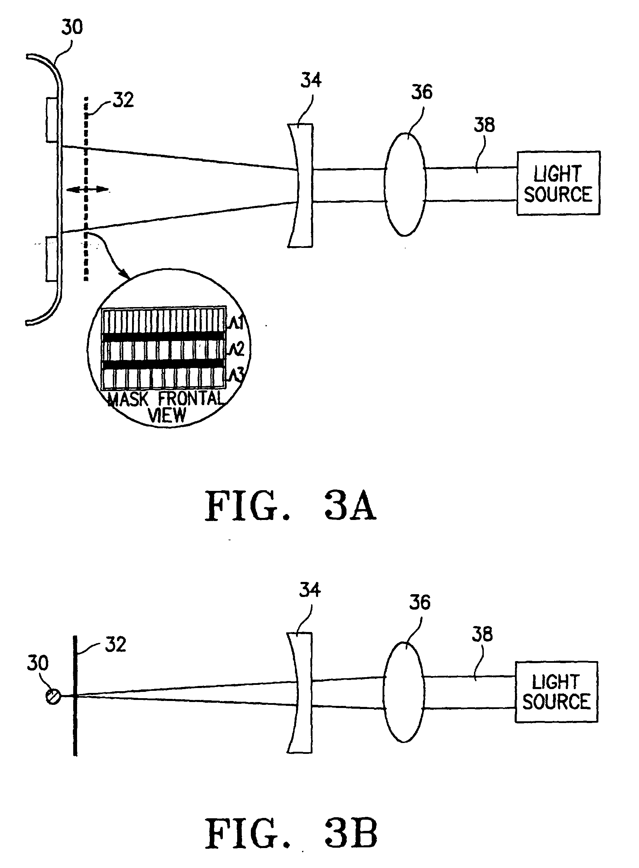

The multi-period mask using method reduces a diffraction effect by changing the period of a multi-period mask and thus keeping a narrow distance between an optical fiber and the mask if the period of fiber gratings is greater than a predetermined value and thus the mask is spaced from the optical fiber by a predetermined distance. Referring to FIGs. 3A and 3B, UV light 38 focused in a perpendicular direction to the length of an optical fiber 30 by a cylindrical convex lens 36 is diverged along the axial direction of the optical fiber 30 through a cylindrical concave lens 34. While the diverged light is passing through a mask 23, the shadow patterns of the mask 32 are written on the optical fiber 30. The period of the shadow patterns on the optical fiber 30 is changed by moving the mask 32 to and fro. If the mask 32 is moved toward the cylindrical concave lens 34, the period increases and if the mask 32 is moved toward the optical fiber 30, the period decreases. Because the single mask 32 has a plurality of periods Λ1, Λ2, and Λ3, an available fiber grating period range is wide enough to fabricate fiber gratings without replacing the mask 32.

However, a diffraction effect cannot be avoided with this method either. In addition, as the mask is spaced from the optical fiber by different distances according to the periods of intended fiber gratings, different diffraction effects are produced.

Consequently, the above conventional fiber grating fabrication methods are ineffective in cost and processing time because fiber gratings are fabricated with limited periods and masks must be changed whenever the period of fiber gratings is changed. In addition, as different diffraction effects occur according to different periods of fiber gratings, processing conditions (e.g., exposure time) cannot be estimated accurately.

A new method to control chirp and wavelength of fibre Bragg gratings for multichannel chromatic dispersion compensation is known from I. Riant and P. Sansonetti, IEE Colloquium on optical fibre gratings, London, UK, February 7, 1997, p. 18/1-3. The magnification of mask fabricated fibre Bragg gratings is known from Prohaska et al, Electronics letters, IEE Stevenage, GB, vol. 29, no. 18, 1993, p. 1614-1615. An apparatus for manufacturing long-period fibre gratings and an apparatus for manufacturing two-band long-period fibre gratings using the same as known from WO 00/11509.

### SUMMARY OF THE INVENTION

It is, therefore, an object of the present invention to provide an optical fiber fabrication apparatus which minimizes a diffraction effect produced by a mask in fabrication of fiber gratings in order to prevent deterioration of the spectrum characteristics of the fiber gratings that might otherwise occur.

It is another object of the present invention to provide an optical fiber grating fabrication apparatus which can estimate processing conditions relatively accurately by removing the difference between diffraction effects produced according to the periods of fiber gratings.

The foregoing and other objects can be achieved by providing an optical fiber grating fabricating apparatus as defined in claim 1. To fabricate fiber gratings according to the present invention, an optical fiber is prepared, a mask with a predetermined period is spaced from the optical fiber, for forming patterns to be used in fabricating gratings on the optical fiber, a UV light source projects UV light in a perpendicular direction to the optical fiber, a lens focuses the UV light, and a mobile concave lens diverges the focused UV light along the length direction of the optical fiber and changes the period of the fiber gratings while moving to and fro.

To fabricate fiber gratings according to another aspect of the present invention, an optical fiber is prepared, an integrated multi-period mask is spaced, from the optical fiber, for forming patterns to be used in fabricating gratings in a selected period on the optical fiber, a UV light source projects UV light in a perpendicular direction to the optical fiber, a lens focuses the UV light, and a mobile concave lens diverges the focused UV light along the length direction of the optical fiber and changes the period of the fiber gratings while moving to and fro.

### BRIEF DESCRIPTION OF THE DRAWINGS

The above and other objects, features and advantages of the present invention will become more apparent from the following detailed description when taken in conjunction with the accompanying drawings in which:
FIG. 1A is a schematic view of a conventional optical fiber grating fabrication apparatus;
FIG. 1B is a side view illustrating the conventional optical fiber grating fabrication apparatus;
FIG. 2A is a schematic view of another conventional optical fiber grating fabrication apparatus;
FIG. 2B is a side view illustrating the second conventional optical fiber grating fabrication apparatus;
FIG. 3A is a schematic view of a third conventional optical fiber grating fabrication apparatus;
FIG. 3B is a side view illustrating the third conventional optical fiber grating fabrication apparatus;
FIG. 4A is a schematic view of an optical fiber grating fabrication apparatus according to a preferred embodiment of the present invention;
FIG. 4B is a side view illustrating the optical fiber grating fabrication apparatus according to the preferred embodiment of the present invention;
FIG. 5A is a schematic view of an optical fiber grating fabrication apparatus according to another preferred embodiment of the present invention; and
FIG. 5B is a side view illustrating the optical fiber grating fabrication apparatus according to the second preferred embodiment of the present invention.

### DETAILED DESCRIPTION OF THE PREFERRED EMBODIMENTS

Preferred embodiments of the present invention will be described hereinbelow with reference to the accompanying drawings. In the following description, well-known functions or constructions are not described in detail since they would obscure the invention in unnecessary detail.

An optical fiber grating fabrication apparatus according to the present invention is applicable to fabrication of fiber gratings using a mask.

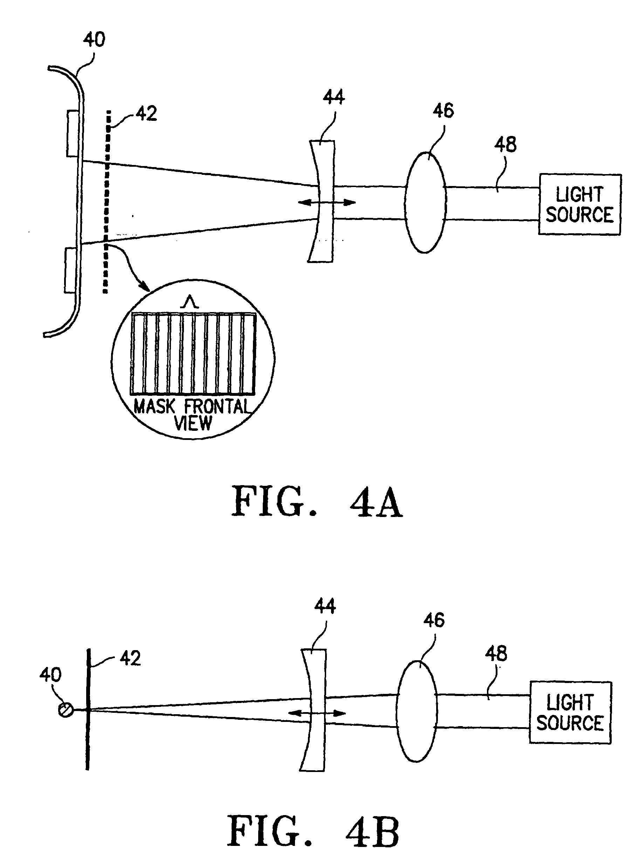

FIG. 4A is a schematic view of an optical fiber grating fabrication apparatus according to a preferred embodiment of the present invention and FIG. 4B is a side view illustrating the optical fiber grating fabrication apparatus according to the preferred embodiment of the present invention.

Referring to FIGs. 4A and 4B, the optical fiber grating fabrication apparatus according to the first embodiment of the present invention is comprised of an optical fiber 40 mounted on a support, a mask 42 for forming patterns to be used in fabrication of gratings along the direction of the optical fiber 40, a UV light source for emitting UV light 48, a lens 46 for focusing the UV light 48, and a mobile concave lens 44 for diverging the focused UV light along the axial direction of the optical fiber 40. The mask 42 has a predetermined period A and gratings are also written in the optical fiber 40 in the period Λ.

The mask 42 is fixed at a position spaced from the optical fiber 40, particularly, as near the optical fiber 40 as possible and the fiber grating period Λ is changed by moving the mobile concave lens 44. The narrow distance between the mask 42 and the optical fiber 40 minimizes a diffraction effect.

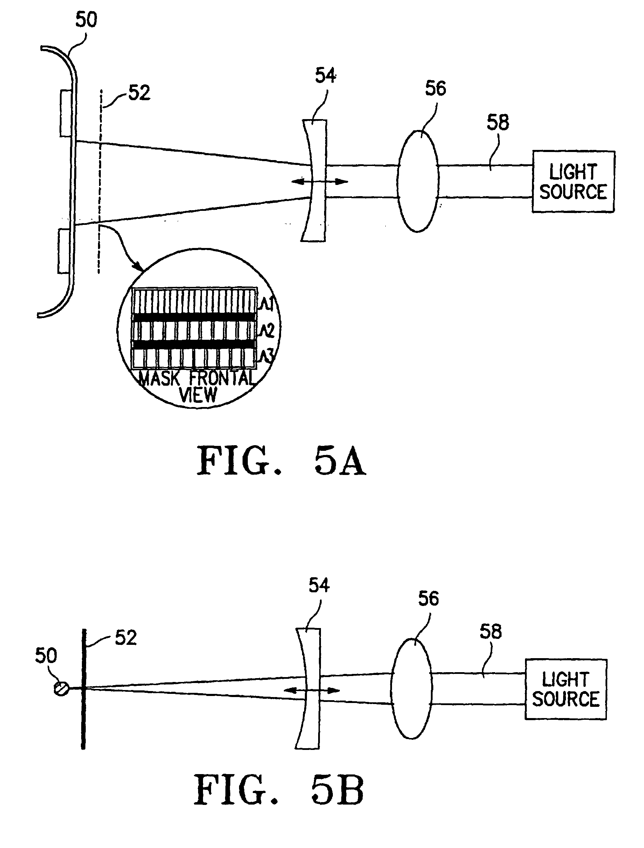

FIG. 5A is a schematic view of an optical fiber grating fabrication apparatus according to another preferred embodiment of the present invention and FIG. 5B is a side view illustrating the optical fiber grating fabrication apparatus according to the second preferred embodiment of the present invention.

Referring to FIGs. 5A and 5B, the optical fiber grating fabrication apparatus according to the second embodiment of the present invention is comprised of an optical fiber 50 mounted on a support, a mask 52 for forming patterns to be used in fabrication of gratings along the direction of the optical fiber 50, a UV light source for emitting UV light 58, a lens 56 for focusing the UV light 58, and a mobile concave lens 54 for diverging the focused UV light along the axial direction of the optical fiber 50. The mask 52 has an integrated multi-period mask with periods Λ1, Λ2, and Λ3 and gratings are written in the optical fiber 40 in a selected period.

The mask 52 is fixed at a position spaced from the optical fiber 50, particularly, as near the optical fiber 50 as possible and the fiber grating period is changed by moving the mobile concave lens 54. The narrow distance between the mask 52 and the optical fiber 50 minimizes a diffraction effect. Since the mask 52 is spaced from the fiber grating 50 by a fixed distance, there is no need for considering changes in processing conditions which were encountered in the conventional fiber grating fabrication process as changes in the distance between a mask and an optical fiber cause different diffraction effects.

If a fiber grating period becomes too large or too small in the process of fabricating fiber gratings moving the concave lens 54 to and fro in arrow directions, an appropriate period portion of the integrated multi-period mask 52 is selected by adjusting the height of the mask 52. In this manner, fiber gratings can be fabricated lengthwise in the optical fiber in diverse periods.

In accordance with the present invention as described above, a diffraction effect and processing time are reduced and deterioration of the spectrum characteristics of fiber gratings is prevented because the fiber gratings are fabricated with a mask spaced from an optical fiber by a predetermined distance, particularly by a minimum distance. Furthermore, the fixed distance between the mask and the optical fiber removes diffraction variations caused according to the wavelengths of intended fiber gratings. As a result, processing conditions can be estimated relatively accurately, thereby facilitating fabrication of fiber gratings.

While the invention has been shown and described with reference to certain preferred embodiments thereof, it will be understood by those skilled in the art that various changes in form and details may be made therein without departing from the scope of the invention as defined by the appended claims.

## Claims

1. An optical fiber grating fabricating apparatus comprising:
a prepared optical fiber (40);
a mask (42,52) with a predetermined period spaced form the optical fiber (40), for forming patterns to be used in fabricating gratings on the optical fiber (40);
an ultraviolet (UV) light source for projecting ultraviolet light (48) in a perpendicular direction to the optical fiber (40);
a lens (46) for focusing the ultraviolet light (48),
a mobile lens (44) for changing the period of the fiber gratings while moving to and fro,
**characterized in that**
the mobile lens is a mobile concave lens (44) for diverging the focused ultraviolet light along the length direction of the optical fiber (40).

2. An optical fiber grating fabricating apparatus according to claim 1, wherein the mask (42,52) is an integrated multi-period mask (52), for forming the patterns to be used in fabricating gratings in a selected period on the optical fiber (50).

## Patentansprüche

1. Vorrichtung zum Herstellen eines Gitters für optische Fasern, die aufweist:
eine vorbereitete, optische Faser (40);
eine Maske (42, 52) mit einer vorbestimmten Periode, beabstandet von der optischen Faser (40), zum Bilden von Mustern, die beim Herstellen von Gittern an der optischen Faser (40) verwendet werden soll;
eine Ultraviolett-(UV)-Lichtquelle zum Projizieren von ultraviolettem Licht (48) in einer senkrechten Richtung zu der optischen Faser (40);
eine Linse (46) zum Fokussieren des ultravioletten Lichts (48);
eine bewegbare Linse (44) zum Ändern der Periode der Faser-Gitter, während sie nach hinten und nach vorne bewegt wird,
**dadurch gekennzeichnet, dass**
die bewegbare Linse eine bewegbare, konkave Linse (44) zum Divergieren des fokussierten, ultravioletten Lichts entlang der Längenrichtung der optischen Faser (40) ist.

2. Vorrichtung zum Herstellen eines Gitters für optische Fasern nach Anspruch 1, wobei die Maske (42, 52) eine integrierte Multi-Periode-Maske (52) ist, zum Bilden der Muster, die zum Herstellen von Gittern, in einer ausgewählten Periode auf der optischen Faser (50), verwendet werden sollen.

## Revendications

1. Dispositif de fabrication de réseaux dans une fibre optique comprenant :
- une fibre optique préparée (40) ;
- un masque (42,52) avec une période prédéterminée écarté de la fibre optique (40), pour former des motifs destinés à être utilisés dans la fabrication de réseaux sur la fibre optique (40) ;
- une source de lumière ultraviolette (UV) pour projeter une lumière ultraviolette (48) dans une direction perpendiculaire à la fibre optique (40) ;
- une lentille (46) pour focaliser la lumière ultraviolette (48) ; et
- une lentille mobile (44) pour changer la période des réseaux de la fibre tout en se déplaçant en va-et-vient,
**caractérisé en ce que** la lentille mobile est une lentille concave mobile (44) pour faire diverger la lumière ultraviolette focalisée suivant la direction longitudinale de la fibre optique (40).

2. Dispositif de fabrication de réseaux dans une fibre optique selon la revendication 1, dans lequel le masque (42,52) est un masque à périodes multiples intégrées (52), pour former les motifs destinés à être utilisés dans la fabrication de réseaux dans une période choisie sur la fibre optique (50).
